Europäisches Patentamt

(19) European Patent Office

Office européen des brevets

(11) Veröffentlichungsnummer: **0 195 075**
**B1**

(12) EUROPÄISCHE PATENTSCHRIFT

(45) Veröffentlichungstag der Patentschrift:
03.05.89

(51) Int. Cl.⁴: **B 01 D  53/36**

(21) Anmeldenummer: **85904963.7**

(22) Anmeldetag: **22.08.85**

(86) Internationale Anmeldenummer:
**PCT/EP 85/00429**

(87) Internationale Veröffentlichungsnummer:
**WO 86/01431 (13.03.86 Gazette 86/6)**

(54) **VERFAHREN UND VORRICHTUNG ZUR SELEKTIVEN KATALYTISCHEN BESEITIGUNG VON STICKOXYDEN AUS DEN ABGASEN VON FEUERUNGSANLAGEN.**

(30) Priorität: 29.08.84 DE 3431730

(43) Veröffentlichungstag der Anmeldung:
24.09.86 Patentblatt 86/39

(45) Bekanntmachung des Hinweises auf die Patenterteilung:
03.05.89 Patentblatt 89/18

(84) Benannte Vertragsstaaten:
AT BE DE FR GB IT NL SE

(56) Entgegenhaltungen:
DE-A- 2 360 255

Japanese Patents Report, volume 82, No. 34, 24 September 1982, Derwent Publications, London (GB), see abstract J 82039168

(73) Patentinhaber: Kraftanlagen AG., Im Breitspiel 7, D-6900 Heidelberg 1 (DE)

(72) Erfinder: RIECKERT, Lothar, Im Eichbäumle 21, D-7500 Karlsruhe 1 (DE)
Erfinder: KOTTER, Michael, Frühmessweinberg 22, D-7520 Bruchsal 4 (DE)

(74) Vertreter: Helber, Friedrich G., Dipl.-Ing. et al, Patentanwälte Dipl.-Ing. F. G. Helber Dipl.-Ing. J.K. Zenz Giesser Weg 47, D-6144 Zwingenberg (DE)

## Beschreibung

Die Erfindung betrifft ein Verfahren zur selektiven Beseitigung der Stickoxyde in den Abgasen von Feuerungsanlagen durch Reduktion mit von außen zugeführtem Ammoniak unter Reaktionsbeschleunigung durch einen Katalysator, der in einer Zone von den Abgasen und in einer anderen Zone von der Feuerungsanlage als Verbrennungsluft zuzuführender Frischluft durchströmt wird, wobei die Lage der von den Abgasen bzw. der Frischluft durchströmten Zonen kontinuierlich oder schrittweise so geändert wird, daß die zuvor von Abgasen durchströmten Abschnitte danach von Frischluft und umgekehrt durchströmt werden, sowie eine Vorrichtung zur Durchführung des Verfahrens.

Es ist bekannt, zur selektiven Reduktion der z.B. in Kessel-Abgasen enthaltenen Stickoxyde dampfförmiges Ammoniak (NH₃) unter Druck oder drucklos in Wasser gelöst in den aus einer Feuerungsanlage austretenden Abgasstrom einzudosieren, wobei durch eine Mischstrecke mit entsprechenden Einbauten die Ausbildung einer strähnenfreien Ammoniak- und Temperaturverteilung im Abgasstrom innerhalb der anschließenden Rauchgaskanäle angestrebt wird. Anschließend wird das Gemisch durch einen einem umlaufenden Regenerativ-Wärmetauscher zur Übertragung der Abgaswärme an die der Feuerung zugeführte Verbrennungsluft vorgeschalteten Katalysator zugeführt. Der Katalysator ist als Festbett-Reaktor mit vorzugsweise vertikal nach unten gerichteter Strömung ausgebildet. In dem Reaktor ist eine Wabenstruktur enthalten, die als katalytisch wirkenden Stoff eine kristalline Vanadium-Titan-Verbindung aufweist. Der Druckverlust des Festbett-Reaktors wird bei der Bemessung des Rauchgasgebläses berücksichtigt. Durch eine vertikal nach unten gerichtete Strömung im Reaktor soll der Ablagerung fester Verunreinigungen innerhalb des Katalysators begegnet bzw. diese in Grenzen gehalten werden. Die auftretenden Beläge werden durch Blasen mittels Druckluft bzw. Dampf diskontinuierlich beseitigt. Die Standzeit der Katalysatoren innerhalb des Reaktors beträgt — je nach Kessel, Fahrweise und Zusammensetzung der als Brennstoff eingesetzten Kohle — mehr als zwei Jahre.

Eine Verbesserung der Katalysator-Standzeit wird gemäß einem nicht vorveröffentlichten Vorschlag der eingangs erwähnten Art (DE-A-3 406 657, WO 85/03645) dadurch erreicht, daß der Katalysator in unterschiedlichen Zonen von den Abgasen — einschließlich des zuvor zugemischten Ammoniaks — einerseits und im Gegenstrom mit als Verbrennungsluft für die Feuerungsanlage vorgesehener Frischluft andererseits durchströmt wird, wobei die Lage der durchströmten Zonen ständig — sei es schrittweise oder kontinierlich — so geändert wird, daß die zuvor von Abgasen durchströmte Zone dann von Frischluft und umgekehrt durchströmt wird. Durch den ständig einwirkenden Frischluftstrom wird dabei eine gegenüber der früher praktizierten diskontinuierlichen Reinigung mittels Blaslanzen verlängerte Wirksamkeit der katalytisch wirksamen Verbindung des Katalysators, d.h. eine Verlängerung von Standzeit, erreicht. Hinzu tritt auch eine Verringerung des konstruktiven Aufwands der Vorrichtung insofern, als es möglich ist, den Katalysator mit dem der Feuerungsanlage zugeordneten umlaufenden Regenerativ-Wärmetauscher für die Verbrennungsluft-Vorwärmung zu koppeln bzw. den Katalysator sogar in den Regenerativ-Wärmetauscher zu integrieren, indem beispielsweise die Oberfläche der Speicherelemente des Regenerativ-Wärmetauschers mit der katalytisch wirksamen Verbindung beschichtet wird.

Ein dem vorstehenden Verfahren im wesentlichen entsprechendes Verfahren der Abgasreinigung ist aus der JP-B-51/87471 bekannt, vgl. dazu auch Japanese Patents Report, Nr. 34, Bd. 82, 24.9.1982, Derwent Publications, Abstract J 82 039 168. Auch bei diesem Verfahren wird der zur Reduktion von $NO_x$ eingesetzte Ammoniak dem Abgasstrom vor dessen Eintritt in den drehbeweglich angeordneten Katalysator zugegeben.

Nun wurde festgestellt, daß die Standzeit des Katalysators sowie die Funktion eines gegebenenfalls nachgeschalteten Regenerativ-Wärmetauschers u.a. auch wesentlich von der Entstehung und Ablagerung von Ammoniumhydrogensulfat ($NH_4 HSO_4$) auf den katalytisch wirksamen Oberflächen der Katalysatorelemente bzw. den wärmetauschenden Oberflächen des Regenerativ-Wärmetauschers abhängt, und zwar entsteht dieses klebrige Ablagerungen bildende Salz aus dem in den Feuerungsabgasen in der Regel enthaltenen Schwefel in Verbindung mit dem zur Reduktion der Stickoxyde zugemischten Ammoniak und in den Abgasen enthaltenem Wasser und Sauerstoff.

Der Erfindung liegt demgegenüber die Aufgabe zugrunde, die Entstehung von Ammoniumhydrogensulfat bei der katalytischen Reduktion von Stickoxyden in Verbrennungsabgasen mittels Ammoniak weitgehend zu verringern und dadurch die Dauer der Wirksamkeit, d.h. die Standzeit des Katalysators, wesentlich zu verlängern und Verschlechterungen der Wärmeübertragungsrate in einem gegebenenfalls vorgesehenen Regenerativ-Wärmetauscher zu vermeiden.

Ausgehend von der Erkenntnis, daß die für den Katalysator verwendeten katalytisch wirksamen Verbindungen, z.B. die oben erwähnten kristallinen Vanadium-Titan-Verbindungen, eine deutliche Bindungswirkung für dampfförmiges Ammoniak haben, wird diese Aufgabe erfindungsgemäss dadurch gelöst, daß das Ammoniak der Frischluft vor deren Eintritt in der Katalysator zugemischt wird. Das Einbringen des für die Reduktion der Stickoxyde erforderlichen Ammoniaks in die Abgase erfolgt also nicht mehr in den vor dem Katalysator liegenden Abschnitt der Abgasleitung, sondern durch Zumischung zu der dem Katalysator zugeführten Frischluft, wobei es durch die Bindungswirkung mit dem katalytisch wirksamen Stoff dann im Katalysator aus dem Frischluftstrom zurückgehalten und in die von den Abgasen durchströmte Zone überführt wird, wo das Ammoniak dann die angestrebte katalytische Reduktion der dort in den Abgasen enthaltenen Stickoxyde bewirkt und dabei in molekularen Stickstoff und Wasser zersetzt wird.

Das Ammoniak wird dabei der Frischluft vorzugsweise in solcher Menge zugemischt, daß es in der frischuftdurchströmten Zone des Katalysators weitgehend an die Oberfläche des katalytisch wirksamen Materials gebunden und bei der sich anschließenden Durchströmung mit Feuerungsabgasen im wesentlichen vollständig für die Reduktion der in diesen enthaltenen Stickoxyde verbraucht wird. In dem dem Katalysator zuströmenden Abgas kann dann — wegen des Fehlens von Ammoniak — Ammoniumhydrogensulfat überhaupt nicht entstehen und das im Katalysator selbst von der Frischluftseite zugeführte Ammoniak wird im wesentlichen vollständig zur Reduktion der Stickoxyde verbraucht, so daß dieses schädliche Salz also auch im Katalysator selbst kaum noch entsteht. Dabei ist noch darauf hinzuweisen, daß selbst dann, wenn die Zudosierung von Ammoniak zum Frischluftstrom mengenmässig so erfolgt, daß ein Teil des Ammoniaks in der Frischluft verbleibt und anschließend der Feuerungsanlage zugeführt wird, dies nicht bedeutet, daß dann mit den Abgasen auch Ammoniak aus der Feuerungsanlage austritt. Das über die Frischluft zugeführte Ammoniak wird nämlich bei den in den Feuerungsanlagen herrschenden Temperaturen zersetzt, so daß in den Abgasen also allenfalls eine geringfügig erhöhte Menge von molekularem Stickstoff enthalten sein könnte, der aber unschädlich ist.

Die zur Durchführung des erfindungsgemässen Verfahrens vorgesehene Vorrichtung, bei welcher der Katalysator aus in einem Träger angeordneten Katalysatorelementen gebildet ist, und der Träger und die Anschlüsse für das zonenweise Durchströmen des Katalysators mit den Abgasen bzw. der Frischluft relativ zueinander verdrehbar ausgebildet sind und eine Antriebsvorrichtung zur schrittweisen oder kontinuierlichen Verdrehung derselben vorgesehen ist, ist so ausgebildet, daß in der in Strömungsrichtung vor dem Katalysator liegenden, zum Katalysator-Anschluß für die Frischluft führenden Frischluft-Leitung der Auslaß einer von einem Ammoniakvorrat gespeisten Ammoniak-Zumischleitung angeordnet ist. Das in die Frischluft eingedüste Ammoniak kann dabei durch eine durch geeignete Einbauten in der Frischluft-Leitung ausgebildete Mischstrecke in der Frischluft verteilt werden, oder — alternativ — kann auch eine Vormischung des Ammoniaks mit einem im Bypass zum Hauptstrom der Frischluft geführten Frischluft-Teilstrom erfolgen, der vor dem Katalysator in die Frischluft-Leitung zurückgeführt wird.

Die Erfindung ist in der folgenden Beschreibung zweier Ausführungsbeispiele in Verbindung mit der Zeichnung näher erläutert, und zwar zeigt:

Fig. 1 ein schematisches Schaltbild einer Feuerungsanlage mit nachgeschaltetem Katalysator und Regenerativ-Wärmetauscher; und

Fig. 2 ein Schaltbild einer abgewandelten Feuerungsanlage, bei welcher der nachgeschaltete Katalysator und der Regenerativ-Wärmetauscher zu einer gemeinsamen Baugruppe zusammengefaßt sind.

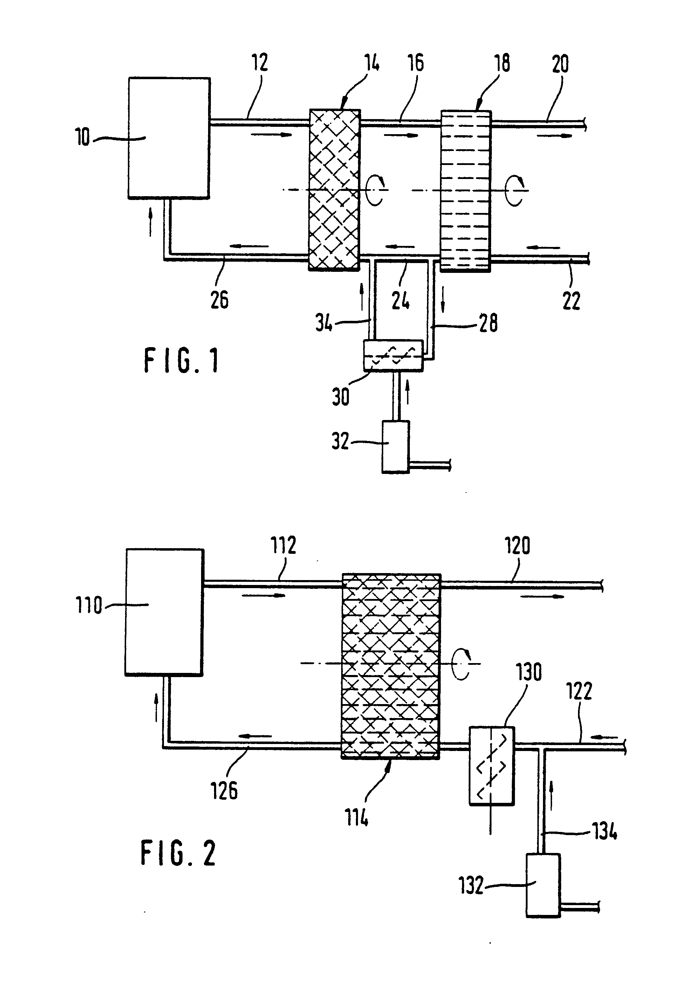

Bei der in Figur 1 schematisch gezeigten Anlage gelangen die Abgase aus der Feuerungsanlage 10 über eine Leitung 12 zu einem Katalysator 14, welcher von in einem kontinuierlichen drehangetriebenen Träger angeordneten Katalysatorelementen gebildet sein möge. Die über die Leitung 12 zugeführten Abgase durchströmen den Katalysator 14 also jeweils in der — in Figur 1 oben liegenden — Zone, wo die katalytische Reduktion der in den Abgasen enthaltenen Stickoxyde erfolgt. Die den Katalysator verlassenden, mit molekularem Stickstoff und Wasser angereicherten Abgase gelangen dann über eine Leitung 16 in den umlaufenden Regenerativ-Wärmetauscher 18 zur Übertragung der Abgaswärme an die der Feuerungsanlage 10 als Verbrennungsluft zuzuführende Frischluft. Im Anschluß an den umlaufenden Regenerativ-Wärmetauscher gelangen die Abgase dann über die Abgasleitung 20 in die — nicht dargestellte — Anlage zur Abscheidung der Schwefelverbindungen und Wiederaufheizung für den Eintritt in den Abgaskamin.

Die der Feuerungsanlage 10 als Verbrennungsluft zuzuführende Frischluft tritt über die Leitung 22 zunächst in den umlaufenden Regenerativ-Wärmetauscher 18 ein, wird in diesem im Gegenstrom zu den Abgasen vorgewärmt und anschliessend über eine Leitung 24 zum Katalysator 14 und — gleichfalls im Gegenstrom zu den Abgasen — in einer — in Figur 1 unten liegenden Zone — durch den Katalysator hindurchgeführt. Von der der Eintrittsseite des Katalysators 14 gegenüberliegenden Austrittsseite strömt die Frischluft dann über eine Leitung 26 zur Feuerungsanlage 10.

Die Eindüsung des für die Reduktion der Stickoxyde im Katalysator 14 erforderlichen Ammoniaks erfolgt in die zwischen dem Auslaß des Regenerativ-Wärmetauschers 18 und dem Einlaß des Katalysators 14 verlaufende Frischluft-Leitung 24, wobei hinter dem Wärmetauscher 18 ein Teilstrom der Frischluft aus der Leitung 24 in eine Leitung 28 zu einer Mischstrecke 30 geleitet wird, in welche Ammoniak (NH₃) aus einem Vorratsbehälter 32 zugeführt und in den Frischluft-Teilstrom eindosiert wird. Anschließend wird der Frischluft-Teilstrom über die Leitung 34 in den Hauptstrom der Frischluft zurückgeführt und somit dem schrittweise oder kontinuierlich umlaufenden Katalysator 14 zugeführt. In der frischluftdurchströmten Zone des Katalysators wird das in der Frischluft enthaltene Ammoniak an die in den durchströmten Oberflächen der Katalysatorelemente freiliegende katalytisch wirksame Verbindung gebunden und in die abgasdurchströmte Zone überführt, wo dann die angestrebte Reduktion der Stickoxyde zu Stickstoff und Wasser erfolgt.

Dem Katalysator 14 und dem Regenerativ-Wärmetauscher 18 können grundsätzlich gesonderte Antriebe zugeordnet sein. Zur Verringerung des konstruktiven Aufwands empfiehlt es sich jedoch, den beiden Einheiten einen gemeinsamen Antrieb zuzuordnen, indem beispielsweise der Regenerativ-Wärmetauscher in üblicher Weise motorisch angetrieben und der Katalysator mit dem Wärmetauscher über eine Welle gekoppelt wird.

Bei der in Fig. 2 dargestellten abgewandelten Vorrichtung sind der Katalysator 14 und der Regenerativ-Wärmetauscher 18 des Ausführungsbeispiels gemäß Figur 1 zu einer gemeinsamen Funktions-Baugruppe 114 vereinigt, indem in einem gemeinsamen, drehangetriebenen Träger Speicherelemente für die Speichermasse des Regenerativ-Wärmetauschers angeordnet sind, welche zumindest in einem Teil ihrer Oberfläche mit der katalytisch wirksamen Verbindung, z.B. einer kristallinen Vanadium-Titan-Verbindung, beschichtet sind, wodurch diesen Speicherelementen also gleichzeitig die Funktion der Wärmeübertragung von den Abgasen auf die Frischluft und der Zur-verfügungstellung der katalytisch wirksamen Flächen im Abgasstrom zugeordnet ist. Aufgrund der Vereinigung des Katalysators mit dem Regenerativ-Wärmetauscher entfallen bei dem in Figur 2 dargestellten Ausführungsbeispiel die beim zuvor beschriebenen Ausführungsbeispiel zwischen dem Katalysator 14 und dem Wärmetauscher 18 vorgesehenen, Abgas bzw. Frischluft führenden Leitungen 16 bzw. 24, während im übrigen weitgehende Übereinstimmung herrscht.

Zur Vermeidung unnötiger Wiederholungen werden nachstehend nur noch Abweichungen des Ausführungsbeispiels gegenüber dem bereits beschriebenen Ausführungsbeispiel erläutert, während es genügt, im übrigen auf die Beschreibung zum Ausführungsbeispiel gemäß Figur 1 zu verweisen, zumal den in Fig. 1 und 2 dargestellten, einander entsprechenden Funktionselementen gleiche Bezugszeichen zugeordnet sind, denen beim Ausführungsbeispiel in Figur 2 lediglich eine «1» vorangestellt ist.

Da eine der Frischluft-Leitung 24 entsprechende Leitung beim Ausführungsbeispiel gemäß Figur 2 fehlt, wird das Ammoniak beim zweiten Ausführungsbeispiel aus dem Ammoniak-Vorratsbehälter 132 über eine Leitung 134 in die über die Leitung 122 zugeführte Frischluft eingespeist, die dann in ihrer Gesamtheit durch eine Mischstrecke 130 geführt wird, bevor sie in die Funktions-Baugruppe 114 eintritt, in welcher der Regenerativ-Wärmetauscher und der Katalysator integriert ist.

Es ist ersichtlich, daß im Rahmen des Erfindungsgedankens Abwandlungen und Weiterbildungen der beschriebenen Ausführungsbeispiele verwirklichbar sind. So kann beispielsweise der Katalysator 14 des Ausführungsbeispiels gemäss Figur 1 auch einen vom Antrieb des Regenerativ-Wärmetauschers 18 unabhängigen gesonderten Antrieb haben, so daß der Katalysator unabhängig vom Antrieb des Wärmetauschers kontinuierlich oder schrittweise antreibbar ist. Die Zudosierung des Ammoniaks zu dem in Figur 2 dargestellten Ausführungsbeispiel kann — entsprechend dem Ausführungsbeispiel gemäss Figur 1 — auch in einen aus dem Frischluftstrom abgezweigten Teilstrom erfolgen, der nach Durchmischen mit dem Ammoniak dann in den Frischluft-Hauptstrom zurückgeführt wird. Wesentlich ist in jedem Fall nur, daß das Ammoniak dem Katalysator über die zuströmende Frischluft zugeführt und durch Bindung an die katalytisch wirksame Verbindung dann im Katalysator selbst in die vom Abgas durchströmte Zone überführt wird.

## Patentansprüche

1. Verfahren zur selektiven Beseitigung der Stickoxyde in den Abgasen von Feuerungsanlagen durch Reduktion mit von außen zugeführtem Ammoniak und Reaktionsbeschleunigung durch einen Katalysator, der in einer Zone von den Abgasen und in einer anderen Zone von der Feuerungsanlage als Verbrennungsluft zuzuführender Frischluft durchströmt wird, wobei die Lage der von den Abgasen bzw. der Frischluft durchströmten Katalysatorzonen kontinuierlich oder schrittweise so geändert wird, daß die zuvor von Abgasen durchströmten Abschnitte danach von Frischluft und umgekehrt durchströmt werden, dadurch gekennzeichnet, daß das Ammoniak der Frischluft vor deren Eintritt in den Katalysator zugemischt wird.

2. Verfahren nach Anspruch 1, dadurch gekennzeichnet, daß das Ammoniak in solcher Menge zur Frischluft zugemischt wird, daß es in der frischluftdurchströmten Zone des Katalysators weitgehend an die Oberfläche des katalytisch wirksamen Materials gebunden und bei der sich anschließenden Durchströmung mit Abgasen für die Reduktion der in diesen enthaltenden Stickoxyde verbraucht wird.

3. Vorrichtung zur Durchführung des Verfahrens nach Anspruch 1 oder 2 mit einem aus in einem Träger angeordneten Katalysatorelementen gebildeten Katalysator, bei welchem der Träger und die Anschlüsse für das zonenweise Durchströmen des Katalysators mit den Abgasen bzw. der Frischluft relativ zueinander verdrehbar ausgebildet sind, wobei eine Antriebsvorrichtung zur schrittweisen oder kontinuierlichen Verdrehung des Trägers relativ zu den Anschlüssen vorgesehen ist, dadurch gekennzeichnet, daß in der in Strömungsrichtung vor dem Katalysator (14; 114) liegenden, zum Katalysator-Anschluß für die Frischluft führenden Frischluft-Leitung (24; 122) der Auslaß einer von einem Ammoniakvorrat (32; 132) gespeisten Ammoniak-Zumischleitung (34; 134) angeordnet ist.

## Claims

1. Process for the selctive elimination of nitrogen oxides in the exhaust gases of fournaces by reduction with ammonia, and acceleration of the reaction by a catalyst which is traversed by the exhaust gases in one zone and by the fresh air to be fed to the furnace as combustion air in another zone, the position of the catalyst zones traversed by the exhaust gases in the one case and the fresh air in the other being changed continuously or step-wise such that the sections previously traversed by exhaust gases are traversed thereafter by fresh air, and vice versa, characterized in that the ammonia is admixed with the fresh air before its entry into the catalyst.

2. Process according to claim 1, characterized in that the ammonia is admixed with the fresh air at such a rate that it is bound to the surface of the catalytically active material in the zone of the catalyst which is traversed by fresh air and is consumed in the reduction of the nitrogen oxides contained in the exhaust gases during the subsequent traversal by the latter.

3. Apparatus for the performance of the process of claims 1 or 2, with a catalyst formed of catalyst elements disposed in a support, in which the support and the connections for the zone-wise passage of the exhaust gases or fresh air through the catalyst are made so as to be rotatable relative to one another, while a drive means for the step-wise or continuous rotation of the carrier relative to the connections is provided, characterized in that, in the fresh-air duct (24; 122) lying ahead of the catalyst (14; 114) in the direction of flow and leading to the catalyst connection for the fresh air, the outlet of an ammonia admixing duct (34; 134) fed from a source of ammonia (32; 132) is disposed.

## Revendications

1. Procédé d'élimination sélective des oxydes d'azote dans les gaz de fumée d'installations de chauffage par réduction avec de l'ammoniac amené de l'extérieur et accélération de la réaction par un catalyseur qui est parcouru, dans une zone, par les gaz de fumée et, dans une autre zone, par de l'air frais à fournir, comme air de combustion, à l'installation de chauffage, la position des zones de catalyseur parcourues par les gaz de fumée ou l'air frais étant modifiée de façon continue ou pas-à-pas de telle sorte que les sections parcourues d'abord par les gaz de fumée soient ensuite parcourues par l'air frais et inversement, caractérisé par le fait que l'ammoniac est mélangé à l'air frais avant leur entrée dans le catalyseur.

2. Procédé selon la revendication 1, caractérisé par le fait que l'ammoniac est mélangé à l'air frais en quantité telle que, dans la zone du catalyseur parcourue par l'air frais, il soit, dans une large mesure, lié à la surface de la matière à activité catalytique et que, lors du passage qui suit avec des gaz de fumée, il soit utilisé par la réduction des oxydes d'azote contenus dans ceux-ci.

3. Dispositif pour la mise en œuvre du procédé selon la revendication 1 ou 2, avec un catalyseur formé d'éléments de catalyseur disposés dans un support, dans lequel le support et les raccordements pour la traversée par zones du catalyseur par les gaz de fumée et l'air frais sont agencés pour qu'on puisse les faire tourner les uns par rapport aux autres, un moyen de commande étant prévu pour faire tourner en continu ou pas-à-pas le support par rapport aux branchements, caractérisé par le fait que, dans la conduite d'air frais (24; 122) menant au raccordement au catalyseur pour l'air frais et située en amont du catalyseur (14; 114), est prévu le débouché d'une conduite de mélange d'ammoniac (34; 134) alimentée par un réservoir d'ammoniac (32; 132).

FIG. 1

FIG. 2